# EUROPEAN PATENT APPLICATION

(11) **EP 4 759 688 A1**
(43) Date of publication of application: **17.06.2026**
(21) Application number: 24851109.9
(22) Date of filing: 08.08.2024
(51) Int. Cl.: B62D 35/02

(54) **UNDERBODY PANEL AND VEHICLE**

(30) Priority: 10.08.2023 CN 202322151566 U
(71) Applicant: Beijing Chehejia Automobile Technology Co., Ltd., Beijing 101300 (CN)
(72) Inventor: ZHAN, Jia, Beijing 101300 (CN); ZHANG, Xiaowei, Beijing 101300 (CN); ZHAO, Zhichao, Beijing 101300 (CN); ZHANG, Weiran, Beijing 101300 (CN); NA, Jia, Beijing 101300 (CN)
(74) Representative: Maiwald GmbH
(86) International application number: PCT/CN2024/110776
(87) International publication number: WO 2025/031464

(57) **Abstract**

An underbody panel (1), comprising a panel body (10), the panel body (10) comprising a connecting side (101) and an exposed side (102) arranged in the thickness direction thereof, and the connecting side (101) of the panel body (10) being used for connecting to a vehicle; the panel body (10) comprises a protective area (11) and a connecting area (12), the protective area (11) comprising a first sub-area (111) and a second sub-area (112), and the junction of the first sub-area (111) and the second sub-area (112) protruding in the direction facing away from the connecting side (101); when the vehicle is placed on a plane and the panel body (10) is mounted at the bottom of the vehicle, the second sub-area (112) is located on the side of the first sub-area (111) facing the rear of the vehicle, a first included angle with the opening facing the rear is formed between the first sub-area (111) and the plane, and a second included angle with the opening facing the rear is formed between the second sub-area (112) and the plane, the first included angle being smaller than the second included angle. The underbody panel can effectively reduce wind resistance, thus improving the performance of vehicles. Further comprised is a vehicle.

## Description

### CROSS-REFERENCE TO RELATED APPLICATION

The present invention is based on and claims priority to Chinese Patent Application No. 202322151566.1, filed on August 10, 2023, the entire content of which is incorporated into the present invention by reference.

### FIELD

The present invention belongs to the field of vehicles, and more particularly relates to an underbody shield and a vehicle.

### BACKGROUND

With the development of vehicle technology, users have increasingly higher requirements for vehicle performance, and the influence of aerodynamic drag performance on the overall performance of a vehicle has received extensive attention. Reducing aerodynamic drag has a significant effect on improving vehicle performance. In a traditional vehicle model, the vehicle has a relatively high aerodynamic drag, which is not conducive to improving vehicle performance.

### SUMMARY

Embodiments of the present invention provide an underbody shield and a vehicle. The underbody shield provided in the present invention may effectively reduce aerodynamic drag, thus improving the performance of the vehicle.

Embodiments of a first aspect of the present invention provide an underbody shield, including a shield body. The shield body includes a connection side and an exposed side arranged along a thickness direction of the shield body, the connection side of the shield body is configured to be connected to a vehicle, and the shield body includes:
a protection zone, including a first sub-zone and a second sub-zone, in which a junction between the first sub-zone and the second sub-zone protrudes in a direction facing away from the connection side; and
in a case that the vehicle is placed on a plane and the shield body is installed at a bottom of the vehicle, the second sub-zone is located at a side of the first sub-zone facing a tail of the vehicle, a first included angle opening toward the tail is formed between the first sub-zone and the plane, a second included angle opening toward the tail is formed between the second sub-zone and the plane, and the first included angle is smaller than the second included angle.

According to embodiments of the first aspect of the present invention, the first included angle is denoted as a, and 2° ≤ a ≤ 3°; and the second included angle is denoted as A, and 14° ≤ A ≤ 15°.

According to any preceding embodiment of the first aspect of the present invention, a thickness of the first sub-zone between a side of the first sub-zone facing the connection side and a side of the first sub-zone facing away from the connection side gradually increases from an end of the first sub-zone far away from the second sub-zone toward an end of the first sub-zone adjacent to the second sub-zone; a thickness of the second sub-zone between a side of the second sub-zone facing the connection side and a side of the second sub-zone facing away from the connection side gradually increases from an end of the second sub-zone far away from the first sub-zone toward an end of the second sub-zone adjacent to the first sub-zone; and a maximum thickness at the junction of the first sub-zone and the second sub-zone is denoted as H, and 30 mm ≤ H ≤ 40 mm;
a length of the first sub-zone along an arrangement direction of the first sub-zone and the second sub-zone is denoted as L, and 400 mm ≤ L ≤ 500 mm; and
a maximum distance between the first sub-zone and the plane is denoted as D, and 150 mm ≤ D ≤ 160 mm.

According to any preceding embodiment of the first aspect of the present invention, a connection zone is further included, and the connection zone is connected to a periphery of the protection zone and is configured to connect and fix the protection zone to the vehicle; the connection zone includes a first connection zone and a second connection zone, the first connection zone is located at a side of the first sub-zone facing away from the second sub-zone, and the second connection zone is located at either side of the protection zone along an arrangement direction of the first sub-zone and the second sub-zone.

According to any preceding embodiment of the first aspect of the present invention, a drainage hole is further included, the drainage hole is formed in at least one of the protection zone and the connection zone, and the drainage hole penetrates the shield body along the thickness direction of the shield body.

According to any preceding embodiment of the first aspect of the present invention, the drainage hole includes a first drainage hole formed in the first sub-zone, and the first drainage hole is circular; and/or, the drainage hole includes a second drainage hole formed in the second sub-zone, and the second drainage hole is in a shape of a rounded rectangle.

According to any preceding embodiment of the first aspect of the present invention, the drainage hole further includes a third drainage hole formed in the second connection zone, the third drainage hole is circular, the second connection zone includes an auxiliary reinforcement groove, and at least part of the third drainage hole is located within the auxiliary reinforcement groove.

According to any preceding embodiment of the first aspect of the present invention, the second sub-zone has a flow guide structure, the flow guide structure includes flow guide grooves and a reinforcement rib, the reinforcement rib extends along the arrangement direction of the first sub-zone and the second sub-zone, the reinforcement rib is located between adjacent flow guide grooves, and each flow guide groove includes a first opening facing the exposed side and a second opening facing the tail.

According to any preceding embodiment of the first aspect of the present invention, the second drainage hole is arranged at a side of each flow guide groove adjacent to the first sub-zone, each flow guide groove includes at least one drainage hole group, and the drainage hole group includes a plurality of the second drainage holes arranged along a direction of a junction line between the first sub-zone and the second sub-zone; and
in a case that a plurality of the drainage hole groups are provided, the plurality of the drainage hole groups are arranged along the arrangement direction of the first sub-zone and the second sub-zone.

According to any preceding embodiment of the first aspect of the present invention, the first sub-zone includes a reinforcement groove, the reinforcement groove is in a shape of a rounded rectangle and extends along the arrangement direction of the first sub-zone and the second sub-zone, the first drainage hole is located within the reinforcement groove, and the reinforcement groove includes a plurality of the first drainage holes arranged along the arrangement direction of the first sub-zone and the second sub-zone.

Embodiments of a second aspect of the present invention further provide a vehicle, including any one of the underbody shields provided in the first aspect of the present invention.

In the underbody shield provided in the present invention, the shield body includes the protection zone. The protection zone includes the first sub-zone and the second sub-zone, and the junction between the first sub-zone and the second sub-zone protrudes in the direction facing away from the connection side, thereby causing a turn in an extension direction of a side of the protection zone facing the exposed side at the junction of the first sub-zone and the second sub-zone, so as to facilitate improvement of airflow under the vehicle. In a case that the vehicle is placed on a plane and the shield body is installed at the bottom of the vehicle, the second sub-zone is located at the side of the first sub-zone facing the tail, the first included angle a opening toward the tail is formed between the first sub-zone and the plane, the second included angle A opening toward the tail is formed between the second sub-zone and the plane, and the first included angle a is smaller than the second included angle A, so that a maximum distance between the first sub-zone and the plane is smaller than a maximum distance between the second sub-zone and the plane. Thus, a distance between the first sub-zone of the underbody shield and the plane is lower, and a high-speed airflow from a chassis side of the vehicle flows along the first sub-zone toward the tail at a smaller angle to the plane, thus accelerating the chassis-side airflow and enabling this airflow to impact a tail airflow, reducing wake vortex of the vehicle, and lowering aerodynamic drag during driving of the vehicle. This helps to improve vehicle performance, such as increasing the driving range of the vehicle.

### BRIEF DESCRIPTION OF THE DRAWINGS

To provide a clearer explanation of the technical solutions in embodiments of the present invention, the following briefly introduces the accompanying drawings required for describing the embodiments of the present invention. Obviously, the accompanying drawings described below are merely some embodiments of the present invention. For those of ordinary skill in the art, other accompanying drawings may be obtained based on these accompanying drawings without creative efforts.
FIG. 1 is a side view of an underbody shield provided in an embodiment of the present invention.
FIG. 2 is a reference view of an underbody shield provided in an embodiment of the present invention in a usage state.
FIG. 3 is a schematic view of an exposed side of an underbody shield provided in an embodiment of the present invention.
FIG. 4 is a schematic view of a connection side of an underbody shield provided in an embodiment of the present invention.
FIG. 5 is a partial schematic view of an underbody shield provided in an embodiment of the present invention.
FIG. 6 is a schematic view of a vehicle provided in an embodiment of the present invention.

In the drawings:
1 underbody shield; 10 shield body; 101 connection side; 102 exposed side; 11 protection zone; 111 first sub-zone; 112 second sub-zone; 12 connection zone; 121 first connection zone; 122 second connection zone; a first included angle; A second included angle; 13 first drainage hole; 14 second drainage hole; 15 flow guide structure; 151 flow guide groove; 152 reinforcement rib; 16 drainage hole group; 17 reinforcement groove; 18 third drainage hole; 19 auxiliary reinforcement groove; 20 connection hole; 2 vehicle.

### DETAILED DESCRIPTION

Features and exemplary embodiments of various aspects of the present invention will be described in detail below. In the following detailed description, numerous specific details are set forth to provide a thorough understanding of the present invention. However, it is apparent to those skilled in the art that the present invention may be implemented without some of these specific details. The following description of the embodiments is merely to provide a better understanding of the present invention by illustrating examples of the present invention.

It should be noted that in the present invention, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover non-exclusive inclusions such that a process, method, article, or device comprising a series of elements includes not only those elements, but also other elements that are not expressly listed, or also includes elements inherent in such a process, method, article, or device. Without further limitation, an element defined by the phrase "comprising ..." does not exclude the presence of additional identical elements in the process, method, article or device comprising the element.

The inventors have discovered through research that in existing vehicles, an underbody shield is designed to be inclined relative to the ground, and the underbody shield is flat, i.e., the underbody pane has a same inclination angle from a tail end of the vehicle toward an end far away from the tail end of the vehicle, so as to improve anti-scraping capability of the vehicle and protect the vehicle. However, such a design results in higher aerodynamic drag of the vehicle, which is unfavorable for improving vehicle performance. Based on research on the above issues, the inventor provides an underbody shield and a vehicle to reduce vehicle aerodynamic drag and improve vehicle performance.

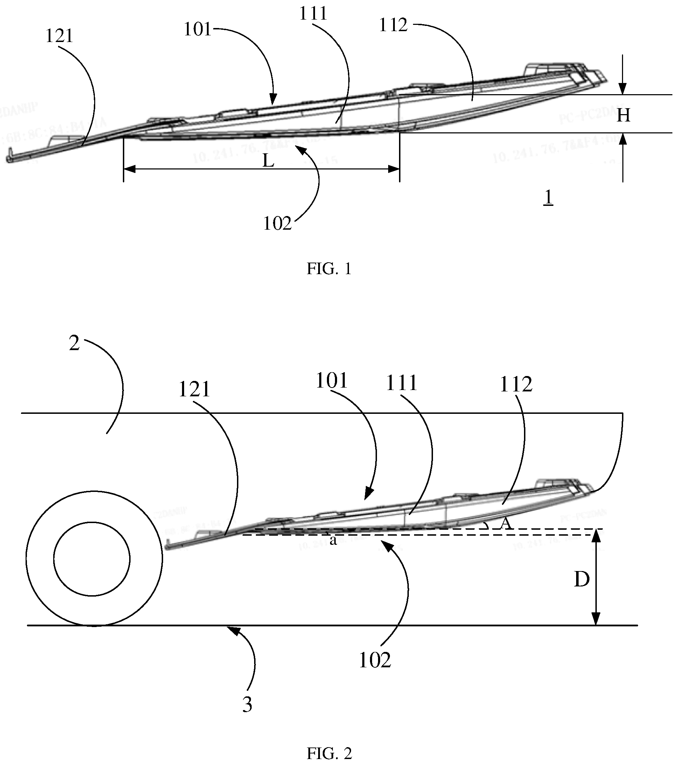

To better understand the present invention, the underbody shield and the vehicle according to embodiments of the present invention are described in detail below with reference to FIG. 1 to FIG. 6.

Referring to FIG. 1 to FIG. 4, embodiments of the present invention provide an underbody shield 1 including a shield body 10. The shield body 10 includes a connection side 101 and an exposed side 102, and the connection side 101 and the exposed side 102 are arranged along a thickness direction of the shield body 10. The connection side 101 of the shield body 10 is configured to be connected to a vehicle. The shield body 10 includes a protection zone 11. The protection zone 11 includes a first sub-zone 111 and a second sub-zone 112, and a junction of the first sub-zone 111 and the second sub-zone 112 protrudes in a direction facing away from the connection side 101. In a case that the vehicle is placed on a plane and the shield body 10 is installed at a bottom of the vehicle, the second sub-zone 112 is located at a side of the first sub-zone 111 facing a tail, and a first included angle, denoted as a, opening toward the tail is formed between the first sub-zone 111 and the plane, and a second included angle, denoted as A, opening toward the tail is formed between the second sub-zone 112 and the plane, in which the first included angle a is smaller than the second included angle A.

The underbody shield 1 provided in the present invention includes the shield body 10, the shield body 10 includes the connection side 101 and the exposed side 102, and the connection side 101 and the exposed side 102 are arranged along the thickness direction of the shield body 10. The connection side 101 is configured to be connected to the bottom of the vehicle. That is, in a case that the underbody shield 1 is installed at the bottom of the vehicle, the connection side 101 is located at a side of the shield body 10 facing the bottom of the vehicle, and the exposed side 102 is located at the side of the shield body 10 facing away from the bottom of the vehicle, i.e., exposed to outside and capable of being in contact with airflow under the vehicle. The underbody shield 1 is configured to protect the bottom of the vehicle. The vehicle includes components such as a rear bumper, a rear subframe, and two rear wheel housings. The bottom of the vehicle includes a rear bottom area; and the rear bumper, the rear subframe, and the two rear wheel housings are arranged around the rear bottom area. The underbody shield 1 provided in the present invention is configured to be connected to the rear bottom area and protect the rear bottom area.

In the underbody shield 1 provided in the present invention, the shield body 10 includes the protection zone 11. The protection zone 11 includes the first sub-zone 111 and the second sub-zone 112, and the junction of the first sub-zone 111 and the second sub-zone 112 protrudes in the direction facing away from the connection side 101, thereby causing a turn in an extension direction of the side of the protection zone 11 facing the exposed side 102 at the junction of the first sub-zone 111 and the second sub-zone 112, so as to facilitate the improvement of airflow under the vehicle. In a case that the vehicle is placed on a plane and the shield body 10 is installed at the bottom of the vehicle, the second sub-zone 112 is located at the side of the first sub-zone 111 facing the tail, the first included angle a opening toward the tail is formed between the first sub-zone 111 and the plane, the second included angle A opening toward the tail is formed between the second sub-zone 112 and the plane, and the first included angle a is smaller than the second included angle A, so that a maximum perpendicular distance between the first sub-zone 111 and the plane is smaller than a maximum perpendicular distance between the second sub-zone 112 and the plane. Thus, a distance between the first sub-zone 111 of the underbody shield 1 and the plane is smaller, and a high-speed airflow from a chassis side of the vehicle flows along the first sub-zone 111 toward the tail at a smaller angle to the plane, thus accelerating the chassis-side airflow and enabling this airflow to impact a tail airflow, reducing wake vortex of the vehicle, and lowering aerodynamic drag during driving of the vehicle, which helps to improve vehicle performance, such as increasing the driving range of the vehicle.

Specifically, the above-mentioned "plane" may refer to the ground or any other plane in contact with four wheels of the vehicle, which is not particularly limited in the present invention.

Compared with the related art, the above implementations of the present invention reduce the included angle between a portion of the underbody shield 1 (such as the first sub-zone 111) and the plane on which the vehicle is placed, so that the airflow between the vehicle and the plane flows more rapidly toward the tail to impact the tail airflow, thus further enhancing the effect of reducing wake vortex the vehicle.

Specifically, the first sub-zone 111 transitions smoothly from an end far away from the second sub-zone 112 to the junction of the first sub-zone 111 and the second sub-zone 112, and the second sub-zone 112 transitions smoothly from an end far away from the first sub-zone 111 to the junction of the first sub-zone 111 and the second sub-zone 112.

In a feasible implementation, as shown in FIG. 2, the first included angle a satisfies 2° ≤ a ≤ 3°, and the second included angle A satisfies 14° ≤ A ≤ 15°.

In the above implementations, the first included angle a may be 2°, 2.5°, 2.8°, or 3°, which is not particularly limited in the present invention. On one hand, transition between the second sub-zone 112 and a planar area of the vehicle bottom may be achieved; on the other hand, this first included angle is small, which may increase the speed of airflow from the chassis side toward the tail, so that the airflow may impact the tail airflow, so as to reduce wake vortex of the vehicle and lower aerodynamic drag.

In the above implementations, the second included angle A may be 14°, 14.5°, 14.8°, or 15°, which is not particularly limited in the present invention. Setting the second included angle A to be greater than the first included angle a allows the vehicle tail to be protected under road conditions such as climbing, descending, or bumpy roads, and improves anti-scraping capability of the vehicle at the tail, so as to enhance reliability of the vehicle, and reduce maintenance costs.

In a feasible implementation, as shown in FIG. 1, a thickness of the first sub-zone 111 between a side of the first sub-zone 111 facing the connection side 101 and a side of the first sub-zone 111 facing away from the connection side 101 gradually increases from an end of the first sub-zone 111 far away from the second sub-zone 112 to an end of the first sub-zone 111 adjacent to the second sub-zone 112, and a thickness of the second sub-zone 112 between a side of the second sub-zone 112 facing the connection side 101 and a side of the second sub-zone 112 facing away from the connection side 101 gradually increases from an end of the second sub-zone 112 far away from the first sub-zone 111 to an end of the second sub-zone 112 adjacent to the first sub-zone 111. A maximum thickness at the junction of the first sub-zone 111 and the second sub-zone 112 is denoted as H, where 30 mm ≤ H ≤ 40 mm.

In the above implementations, the side of the first sub-zone 111 facing the connection side 101 and the side of the second sub-zone 112 facing the connection side 101 may be ensured to lie on a same inclined plane, that is, without altering an original bottom structure of the vehicle, aerodynamic drag of the vehicle during driving is reduced only by modifying the underbody shield 1, thereby helping to lower vehicle costs.

In a feasible implementation, as shown in FIG. 1, a length of the first sub-zone 111 along an arrangement direction of the first sub-zone 111 and the second sub-zone 112 is denoted a L, where 400 mm ≤ L ≤ 500 mm.

In the above implementations, the length of the first sub-zone 111 may be 400 mm, 410 mm, 421 mm, 435 mm, 465 mm, 480 mm, 500 mm, etc., which is not particularly limited in the present invention. By setting the length of the first sub-zone 111 within the above length range, the airflow under the vehicle may flow toward the tail at a smaller angle to the plane within this length range, thereby ensuring the improvement effect of the first sub-zone 111 on vehicle aerodynamic drag.

In a feasible implementation, as shown in FIG. 2, a maximum distance between the first sub-zone 111 and the plane is denoted as D, where 150 mm ≤ D ≤ 160 mm.

In the above implementations, the maximum distance between the first sub-zone 111 and the plane may be 150 mm, 153 mm, 155 mm, 158 mm, 159 mm, 160 mm, etc., which is not particularly limited in the present invention.

In the above implementations, by limiting the maximum distance between the first sub-zone 111 and the plane to the above range, a distance between the vehicle bottom and the plane may be ensured to be relatively small, thereby accelerating the chassis-side airflow and enabling the chassis-side airflow to impact the tail airflow, so as to reduce the wake vortex of the vehicle and lower aerodynamic drag of the vehicle during driving.

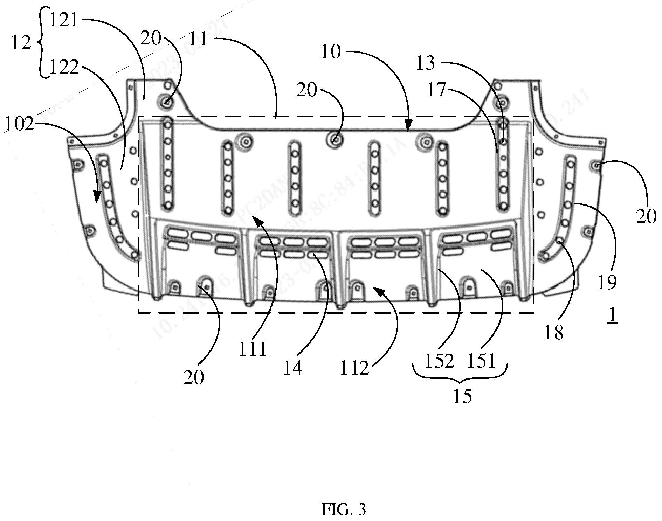

In a feasible implementation, as shown in FIG. 3, the underbody shield further includes a connection zone 12, and the connection zone 12 is connected to a periphery of the protection zone 11 and is configured to connect and fix the protection zone 11 to the vehicle.

In a feasible implementation, as shown in FIG. 3, the connection zone 12 includes a first connection zone 121 and a second connection zone 122. The first connection zone 121 is located at a side of the first sub-zone 111 facing away from the second sub-zone 112, and the second connection zone 122 is located at either side of the protection zone 11 along the arrangement direction of the first sub-zone 111 and the second sub-zone 112.

In the above implementations, the first connection zone 121 and the second connection zone 122 are respectively provided with a connection hole 20 for being connected to the vehicle. The first connection zone 121 may be configured to be connected to the rear subframe, and the second connection zone 122 may be configured to be connected to the two rear wheel housings. An end of the second sub-zone 112 adjacent to the tail, i.e., facing away from the first sub-zone 111, may also be provided with a connection hole 20 for being connected to the rear bumper. An end of the first sub-zone 111 facing away from the tail, i.e., facing away from the second sub-zone 112, may also be provided with a connection hole 20 for being connected to the rear subframe.

The first connection zone 121 may match a shape of the vehicle bottom. The second connection zone 122 may be inclined from the protection zone 11 toward the connection side 101.

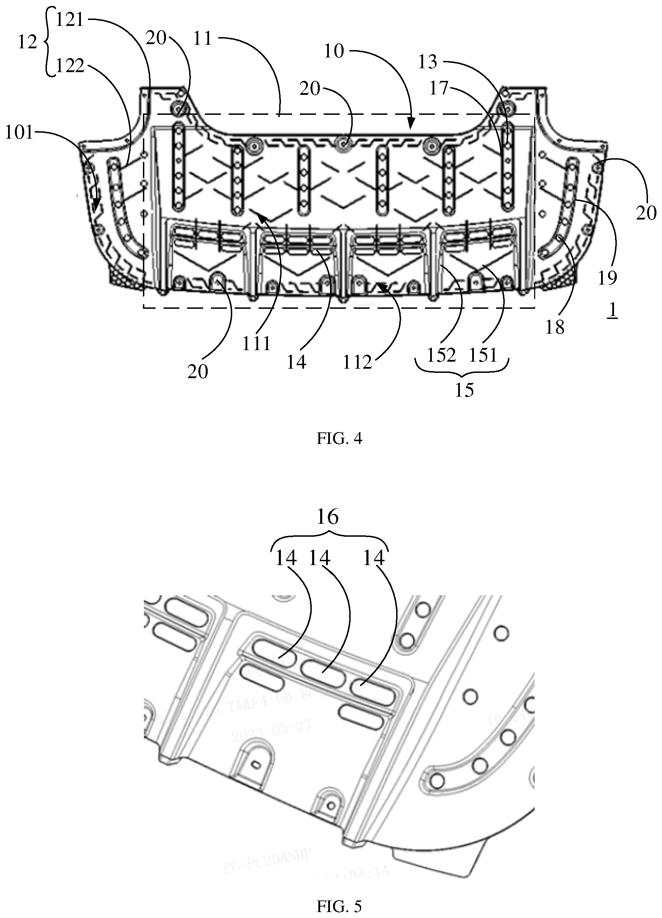

In a feasible implementation, as shown in FIG. 3 and FIG. 4, a drainage hole is further provided, the drainage hole is formed in at least one of the protection zone 11 and the connection zone 12, and the drainage hole penetrates the shield body 10 along the thickness direction of the shield body 10.

In the above implementations, providing the drainage hole on the underbody shield 1 allows water flow between the underbody shield 1 and the vehicle bottom to be drained, thus preventing phenomena such as mold and corrosion at the vehicle bottom from affecting the service life of the vehicle.

In a feasible implementation, the drainage holes include a first drainage hole 13 formed in the first sub-zone 111, and the first drainage hole 13 is circular; and/or the drainage holes include a second drainage hole 14 formed in the second sub-zone 112, and the second drainage hole 14 is in a shape of a rounded rectangle.

In the above implementations, the drainage holes may include the first drainage hole 13 and/or the second drainage hole 14. The first drainage hole 13 is located in the first sub-zone 111. Since the first included angle a formed between the first sub-zone 111 and the plane is small, an axial direction of the first drainage hole 13 is nearly perpendicular to the airflow direction, thus significantly reducing the impact on aerodynamic drag. Additionally, the axial direction of the first drainage hole 13 is nearly perpendicular to the plane, which may allow water to drain almost perpendicularly and achieve rapid drainage. Among different shapes, a circle has a larger area for the same perimeter, i.e., for the same area, a circle has a smaller perimeter. The larger the perimeter of the first drainage hole 13, the greater the impact on aerodynamic drag. Setting the shape of the first drainage hole 13 to be circular may reduce the impact of the drainage hole on aerodynamic drag, so as to further lower aerodynamic drag of the vehicle.

The second drainage hole 14 is located in the second sub-zone 112. The junction of the first sub-zone 111 and the second sub-zone 112 protrudes in the direction facing away from the connection side 101, so that the junction may provide a certain shielding effect on the second drainage hole 14, thus reducing a probability of airflow transmitted from the first sub-zone 111 to the second sub-zone 112 contacting the second drainage hole 14, and reducing the impact of the arrangement of the second drainage hole 14 on aerodynamic drag. Simultaneously providing the second drainage hole 14 may further improve drainage efficiency and reliability, and reduce the probability of water accumulation on a side of the underbody shield 1 adjacent to the vehicle.

In the above implementations, the second drainage hole 14 is in a shape of a rounded rectangle. On one hand, within a predetermined space, a spacing between the second drainage holes 14 is smaller, which may increase a hole area, i.e., a drainage area. On the other hand, stress concentration at corners may be reduced, thereby helping to improve the service life of the underbody shield 1.

The second drainage hole 14 may also be rectangular, circular, etc., which is not particularly limited in the present invention.

In a feasible implementation, as shown in FIG. 3 and FIG. 4, the drainage holes further include a third drainage hole 18 formed in the second connection zone 122, and the third drainage hole 18 is circular. The second connection zone 122 includes an auxiliary reinforcement groove 19, and at least part of the third drainage hole 18 is located within the auxiliary reinforcement groove 19.

In the above implementations, the second connection zone 122 includes the auxiliary reinforcement groove 19 to enhance the reliability of the second connection zone 122. The drainage holes further include the third drainage hole 18 formed in the second connection zone 122, at least part of the third drainage hole 18 is located within the auxiliary reinforcement groove 19. Providing the third drainage holes 18 in the auxiliary reinforcement groove 19 may reduce contact between the third drainage holes 18 and the airflow under the vehicle, thus reducing the impact on aerodynamic drag.

In a case that a space in the auxiliary reinforcement groove 19 is insufficient to accommodate an adequate number of the third drainage holes 18, additional third drainage holes 18 may be provided outside the auxiliary reinforcement groove 19 to meet drainage requirements.

In the above implementations, an extension direction of the auxiliary reinforcement groove 19 may be the same as the airflow direction, which is not particularly limited in the present invention.

In a feasible implementation, as shown in FIG. 3 to FIG. 5, the second sub-zone is provided with a flow guide structure 15. The flow guide structure 15 includes flow guide grooves 151 and a reinforcement rib 152. The reinforcement rib 152 extends along the arrangement direction of the first sub-zone 111 and the second sub-zone 112, and the reinforcement rib 152 is located between adjacent flow guide grooves 151. Each flow guide groove 151 includes a first opening facing the exposed side 102 and a second opening facing the tail.

In the above implementations, on one hand, the airflow under the vehicle may be divided into a plurality of parts by the flow guide structure 15 and discharged, and each flow guide structure 15 is one part, thereby reducing mutual interference between different parts of the airflow, ensuring the orderliness of airflow streamlines, and eliminating the tendency to form a wake vortex when the airflow leaves the underbody shield, so as to further reduce vehicle aerodynamic drag.

On the other hand, the flow guide structure 15 includes the flow guide groove 151, and the second drainage hole 14 is located within the flow guide groove 151, which may further utilize the shielding effect of the junction between the first sub-zone 111 and the second sub-zone 112, thereby further reducing the impact of the arrangement of the second drainage hole 14 on aerodynamic drag.

In a feasible implementation, as shown in FIG. 3 and FIG. 4, the second drainage hole 14 is located at a side of each flow guide groove 151 adjacent to the first sub-zone 111. Each flow guide groove 151 includes at least one drainage hole group 16, and each drainage hole group 16 includes a plurality of the second drainage holes 14 arranged along a direction of a junction line of the first sub-zone 111 and the second sub-zone 112.

In the above implementations, the second drainage hole 14 is located at the side of each flow guide groove 151 adjacent to the first sub-zone 111, and the second drainage holes 14 in each drainage hole group 16 are arranged along the direction of the junction line of the first sub-zone 111 and the second sub-zone 112, so that the second drainage hole 14 is adjacent to the junction of the first sub-zone 111 and the second sub-zone 112, thus further utilizing the shielding effect of the junction between the first sub-zone 111 and the second sub-zone 112.

In a feasible implementation, in a case that a plurality of the drainage hole groups 16 are provided, and the plurality of the drainage hole groups 16 are arranged along the arrangement direction of the first sub-zone 111 and the second sub-zone 112.

In a feasible implementation, as shown in FIG. 3 and FIG. 4, the first sub-zone 111 includes a reinforcement groove 17. The reinforcement groove 17 is in a shape of a rounded rectangle and extends along the arrangement direction of the first sub-zone 111 and the second sub-zone 112. The first drainage hole 13 is located in the reinforcement groove 17, and a plurality of the first drainage holes 13 are provided in each reinforcement groove 17 along the arrangement direction of the first sub-zone 111 and the second sub-zone 112.

In the above implementations, providing the reinforcement groove 17 may enhance the strength of the first sub-zone 111 and increase the service life. The rounded rectangular shape of the reinforcement groove 17 may reduce stress concentration, thus further improving service life. The reinforcement groove 17 extends along the arrangement direction of the first sub-zone 111 and the second sub-zone 112, which is the same as the airflow direction, thereby reducing the impact on aerodynamic drag. The first drainage hole 13 is located within the reinforcement groove 17, and the plurality of the first drainage holes 13 are provided in the reinforcement groove 17 along the arrangement direction of the first sub-zone 111 and the second sub-zone 112, which allows the reinforcement groove 17 to accommodate the first drainage holes 13, thus reducing contact between the first drainage holes 13 and the airflow under the vehicle and reducing the impact on aerodynamic drag.

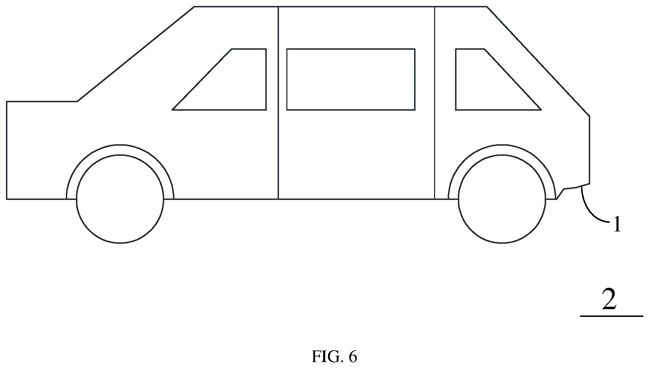

The present invention also provides a vehicle 2. As shown in FIG. 6, the vehicle 2 includes any one of the underbody shields 1 provided in the above implementations of the present invention.

The vehicle 2 provided in the present invention may be a pure electric vehicle 2, a hybrid vehicle 2, or an extended-range vehicle 2, etc., which is not particularly limited in the present invention.

The aerodynamic drag of the vehicle provided in the present invention may be effectively reduced, thereby helping to increase the driving range of the vehicle, improving convenience and durability of the vehicle, and enhancing user experience.

According to the above embodiments of the present invention, these embodiments do not exhaustively describe all details, nor limit the present invention to only the specific embodiments described. Obviously, many modifications and variations may be made based on the above description. This specification selects and specifically describes these embodiments to better explain the principles and practical applications of the present invention, thus enabling those skilled in the art to make good use of the present invention and modifications based the present invention. The present invention is limited only by the claims and the full scope and equivalents thereof.

## Claims

1. An underbody shield, comprising a shield body, wherein the shield body comprises a connection side and an exposed side arranged along a thickness direction of the shield body, the connection side of the shield body is configured to be connected to a vehicle, and the shield body comprises:
a protection zone, comprising a first sub-zone and a second sub-zone, wherein a junction between the first sub-zone and the second sub-zone protrudes in a direction facing away from the connection side;
wherein, in a case that the vehicle is placed on a plane and the shield body is installed at a bottom of the vehicle, the second sub-zone is located at a side of the first sub-zone facing a tail of the vehicle, a first included angle opening toward the tail is formed between the first sub-zone and the plane, a second included angle opening toward the tail is formed between the second sub-zone and the plane, and the first included angle is smaller than the second included angle.

2. The underbody shield according to claim 1, wherein the first included angle is denoted as a, and 2° ≤ a ≤ 3°; and the second included angle is denoted as A, and 14° ≤ A ≤ 15°.

3. The underbody shield according to claim 1, wherein a thickness of the first sub-zone between a side of the first sub-zone facing the connection side and a side of the first sub-zone facing away from the connection side gradually increases from an end of the first sub-zone far away from the second sub-zone toward an end of the first sub-zone adjacent to the second sub-zone; a thickness of the second sub-zone between a side of the second sub-zone facing the connection side and a side of the second sub-zone facing away from the connection side gradually increases from an end of the second sub-zone far away from the first sub-zone toward an end of the second sub-zone adjacent to the first sub-zone; and a maximum thickness at the junction of the first sub-zone and the second sub-zone is denoted as H, and 30 mm ≤ H ≤ 40 mm;
a length of the first sub-zone along an arrangement direction of the first sub-zone and the second sub-zone is denoted as L, and 400 mm ≤ L ≤ 500 mm; and
a maximum distance between the first sub-zone and the plane is denoted as D, and 150 mm ≤ D ≤ 160 mm.

4. The underbody shield according to claim 1, further comprising a connection zone, wherein the connection zone is connected to a periphery of the protection zone and is configured to connect and fix the protection zone to the vehicle; the connection zone comprises a first connection zone and a second connection zone, the first connection zone is located at a side of the first sub-zone facing away from the second sub-zone, and the second connection zone is located at either side of the protection zone along an arrangement direction of the first sub-zone and the second sub-zone.

5. The underbody shield according to claim 4, further comprising a drainage hole, wherein the drainage hole is formed in at least one of the protection zone and the connection zone, and the drainage hole penetrates the shield body along the thickness direction of the shield body.

6. The underbody shield according to claim 5, wherein the drainage hole comprises a first drainage hole formed in the first sub-zone, and the first drainage hole is circular; and/or, the drainage hole comprises a second drainage hole formed in the second sub-zone, and the second drainage hole is in a shape of a rounded rectangle.

7. The underbody shield according to claim 5, wherein the drainage hole further comprises a third drainage hole formed in the second connection zone, the third drainage hole is circular, the second connection zone comprises an auxiliary reinforcement groove, and at least part of the third drainage hole is located within the auxiliary reinforcement groove.

8. The underbody shield according to claim 6, wherein the second sub-zone has a flow guide structure, the flow guide structure comprises flow guide grooves and a reinforcement rib, the reinforcement rib extends along the arrangement direction of the first sub-zone and the second sub-zone, the reinforcement rib is located between adjacent flow guide grooves, and each flow guide groove comprises a first opening facing the exposed side and a second opening facing the tail.

9. The underbody shield according to claim 8, wherein the second drainage hole is arranged at a side of each flow guide groove adjacent to the first sub-zone, each flow guide groove comprises at least one drainage hole group, and the drainage hole group comprises a plurality of the second drainage holes arranged along a direction of a junction line between the first sub-zone and the second sub-zone; and
in a case that a plurality of the drainage hole groups are provided, the plurality of the drainage hole groups are arranged along the arrangement direction of the first sub-zone and the second sub-zone.

10. The underbody shield according to claim 6, wherein the first sub-zone comprises a reinforcement groove, the reinforcement groove is in a shape of a rounded rectangle and extends along the arrangement direction of the first sub-zone and the second sub-zone, the first drainage hole is located within the reinforcement groove, and the reinforcement groove comprises a plurality of the first drainage holes arranged along the arrangement direction of the first sub-zone and the second sub-zone.

11. A vehicle, comprising the underbody shield according to any one of claims 1-10.
